(19) Europäisches Patentamt
European Patent Office
Office européen des brevets

(11) EP 2 468 698 A1

(12) # EUROPÄISCHE PATENTANMELDUNG

(43) Veröffentlichungstag:
**27.06.2012 Patentblatt 2012/26**

(51) Int Cl.:
***C04B 28/10*** *(2006.01)* ***C04B 28/30*** *(2006.01)*
***C04B 28/32*** *(2006.01)*

(21) Anmeldenummer: **10196974.9**

(22) Anmeldetag: **24.12.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Sika Technology AG**
**6340 Baar (CH)**

(72) Erfinder:
- **Honert, Dieter**
  **69234, Dielheim (DE)**
- **Blask, Oliver**
  **68723, Oftersheim (DE)**

(74) Vertreter: **Sika Patent Attorneys**
**c/o Sika Technologies AG**
**Tüffenwies 16-22**
**8048 Zürich (CH)**

(54) **Magnesiumzement**

(57) Gegenstand der Erfindung ist ein Magnesiumzement, enthaltend
(a) mindestens eine Magnesiumverbindung,
(b) mindestens ein Kammpolymer, das ein lineares Polymergerüst und daran gebundene Seitenketten aufweist, wobei das lineare Polymergerüst Carbonsäuregruppen und/oder Carboxylatgruppen aufweist, und
(c) gegebenenfalls mindestens einen Füllstoff.

Die Erfindung betrifft auch Bindemittelsuspensionen und Verarbeitungshilfen für die Magnesiumzemente, Formkörper, Verfahren und Verwendungen der Magnesiumzemente.

EP 2 468 698 A1

## Beschreibung

Die Erfindung betrifft Magnesiumzemente, die Kammpolymere enthalten. Die Erfindung betrifft auch die Herstellung solcher Zemente und ihre Verwendung sowie Formkörper, die aus den Zementen hergestellt werden.

### Stand der Technik

Magnesiumzemente enthalten Magnesiumverbindungen, die als Bindemittel wirken. Magnesiumzemente werden in der Bauchemie für eine Vielzahl von Anwendungen eingesetzt. Ein besonderes Anwendungsgebiet ist die Herstellung von Bauplatten, beispielsweise Holzwolleplatten oder Holzspanplatten. Bei der Herstellung solcher Platten werden geeignete Füllstoffe in den Magnesiumzement eingearbeitet.

Magnesiumzemente enthalten üblicherweise Magnesiumoxid in Verbindung mit einem Magnesiumsalz, insbesondere Magnesiumchlorid oder Magnesiumsulfat. Nach Formgebung und Abbinden, gegebenenfalls gefolgt von Trocknen bzw. Sintern, entstehen harte Festprodukte, wobei die Produkteigenschaften durch Beimischung geeigneter Füllstoff verbessert werden können.

Magnesiumzemente werden mit Wasser abgebunden. Dabei besteht ein Bedürfnis, den Wassergehalt zu verringern, so dass das Produkt weniger porös und stabiler wird. Bei geringem Wassergehalt ist auch ein kürzerer Härtungs- oder Trocknungsvorgang ausreichend.

Magnesiumzemente und ihre Verwendung zur Herstellung von Formkörpern, insbesondere von Holzwolleleichtbauplatten, werden beispielsweise in DE 29 32 332 A1, DE 25 32 581 A1, DE 29 03 177 A1 und DE 10 07 685 beschrieben.

### Das der Erfindung zugrunde liegende Problem

Der Erfindung liegt das Problem zugrunde, ein vereinfachtes und verbessertes Verfahren zur Herstellung von Magnesiumzementen zur Verfügung zu stellen. Erfindungsgemäß sollen auch verbesserte Magnesiumzemente sowie daraus herstellbare Produkte zur Verfügung gestellt werden.

Insbesondere liegt der Erfindung das Problem zugrunde, den Wassergehalt von Magnesiumzementen zu reduzieren und eine Verflüssigung zu erreichen. Dabei sollen die Verarbeitungseigenschaften und die Produkteigenschaften der ausgehärteten Formkörper nur wenig nachteilig verändert werden. Die Bauteile sollen eine hohe Dichte und eine gute Festigkeit, insbesondere hinsichtlich der Zugfestigkeit und Bruchfestigkeit, aufweisen. Bevorzugt soll das Verfahren eine zügige Verarbeitung von Magnesiumzementen ermöglichen. Das Verfahren soll insbesondere für die Herstellung von Holzwolleleichtbauplatten geeignet sein. Die dafür verwendeten Additive und Zusammensetzungen sollen einfach und kostengünstig verfügbar sein und zu einer effizienten Verflüssigung führen.

### Ausführung der Erfindung

Das der Erfindung zugrunde liegende Problem wird überraschenderweise gelöst durch Magnesiumzemente, Verfahren, Bindemittelsuspensionen, Verarbeitungshilfen, Formkörper und Verwendungen gemäß den Patentansprüchen.

Gegenstand der Erfindung ist ein Magnesiumzement, enthaltend

(a) mindestens eine Magnesiumverbindung,
(b) mindestens ein Kammpolymer, das ein lineares Polymergerüst und daran gebundene Seitenketten aufweist, wobei das lineare Polymergerüst Carbonsäuregruppen und/oder Carboxylatgruppen aufweist, und
(c) gegebenenfalls mindestens einen Füllstoff.

Erfindungsgemäß wird mit dem Begriff "Zement" eine aushärtbare Zusammensetzung in Pulverform oder in Form einer Suspension bezeichnet, die zur weiteren Verarbeitung zu einem festen Formkörper geeignet ist. Dabei kann der Zement noch weitgehend trocken sein oder bereits teilweise oder vollständig mit Wasser versetzt sein. Der Zement kann ganz oder teilweise abgebunden sein.

Unter dem Begriff "Magnesiumzement" wird erfindungsgemäß ein aushärtbarer Zement verstanden, der mindestens eine Magnesiumverbindung enthält, die in Verbindung mit Wasser als Bindemittel wirkt. Die Bindungseigenschaften von Magnesiumzementen beruhen im Allgemeinen darauf, dass sich aus einem Magnesiumoxid, gegebenenfalls auch einem Magnesiumhydroxid, und einem Magnesiumsalz nach Zugabe von Wasser gemischte Oxidverbindungen bilden. Die Magnesiumverbindungen sind bevorzugt in einer ausreichenden Menge enthalten, so dass sie nach dem Aushärten eine Matrix bilden, in die der Füllstoff eingearbeitet ist.

In bevorzugten Ausführungsformen enthält der Magnesiumzement als Magnesiumverbindungen Magnesiumoxid (Magnesia), Magnesiumhydroxid und/oder Magnesiumcarbonat und zusätzlich mindestens ein weiteres Magnesiumsalz. Bevorzugt wird als Magnesiumoxid kaustisch gebranntes Magnesia eingesetzt. Dieses entsteht beim Calcinieren von Magnesiumcarbonat (Magnesit) bei Temperaturen von etwa 800°C. Kaustisch gebranntes Magnesia reagiert in Wasser mit Magnesiumsalzen unter Bildung von gemischten Oxiden, die eine hohe Festigkeit aufweisen.

In bevorzugten Ausführungsformen ist das weitere Magnesiumsalz ausgewählt ist aus Magnesiumsulfat, -chlorid, -nitrat, -jodid und -bromid.

Besonders bevorzugt ist eine Kombination von Magnesiumoxid und Magnesiumsulfat. Dieses Gemisch wird bevorzugt in Verbindung mit Cellulosebasierten Füllstoffen, wie Holzwolle, eingesetzt.

In einer weiteren bevorzugten Ausführungsform wird ein Gemisch von Magnesiumoxid und Magnesiumchlorid eingesetzt. Solche Gemische sind im Stand der Technik bekannt und werden als Sorelzement bezeichnet.

Bevorzugt ist der Anteil von Magnesiumverbindungen an dem trockenen Magnesiumzement mindestens 80 Gew.-%, bevorzugt mindestens 90 oder mindestens 95 Gew.-%.

Erfindungsgemäß wird ein Kammpolymer eingesetzt, das ein lineares Polymergerüst und daran gebundene Seitenketten aufweist, wobei das lineare Polymergerüst Carbonsäuregruppen und/oder Carboxylatgruppen aufweist. Als "Kammpolymere" werden Polymere bezeichnet, deren Aufbau angesichts der Anordnung einer Vielzahl von Seitenketten an ein einziges lineares Polymergerüst (Backbone) einem Kamm ähnelt. Der Anteil der Kammpolymere an dem Magnesiumzement liegt bevorzugt zwischen 0,05 und 8 Gew.-%, insbesondere zwischen 0,1 and 5 Gew.-% oder zwischen 0,2 und 2 Gew.-%.

Nach dem Stand der Technik bekannte Kammpolymere enthalten üblicherweise Seitenketten, die einen Polyetherbestandteil aufweisen, insbesondere einen Polyethylen- oder Polypropylenbestandteil. Die Seitenketten sind bevorzugt über Ester-, Amid- und/oder Ethergruppen an die Hauptkette angebunden. Es können jedoch neben den über Ester-, Amid-oder Ethergruppen gebundenen Seitenketten weitere Seitenketten enthalten sein. Kammpolymere weisen häufig eine Kombination verschiedener Seitenketten auf, die sich beispielsweise hinsichtlich funktioneller Gruppen, Länge oder Anteil an den gesamten Seitenketten unterscheiden.

Solche Kammpolymere sind im Stand der Technik bekannt. Sie werden als Verflüssiger für Gipszusammensetzungen eingesetzt. Die Kammpolymere weisen üblicherweise in der Hauptkette freie Carbonsäuregruppen und/oder Carboxylatgruppen auf. Es wird angenommen, dass Kammpolymere in Gipszusammensetzungen über die Hauptkette an die anorganischen Gipspartikel haften, so dass die Seitenketten von den anorganischen Partikeln weg weisen und durch gegenseitige Abstoßung den Verflüssigungseffekt bewirken.

Grundsätzlich sind die beschriebenen Kammpolymere geeignet, um die Verarbeitbarkeit von Magnesiumzementen zu verbessern. Es wurde jedoch festgestellt, dass Kammpolymere mit einem vergleichsweise hohen Anteil an Carbonsäuregruppen und/oder Carboxylatgruppen zur Verbesserung der Verarbeitbarkeit von Magnesiumzementen besonders geeignet sind. Die vorteilhaften Eigenschaften der Kammpolymeren entfalten sich wahrscheinlich in Folge der Adsorption an Zementpartikel. Ohne an eine Theorie gebunden zu sein, wird vermutet, dass die Kammpolymere besser an die Oberfläche von Zementpartikeln binden können, wenn sie eine relativ hohe Ladungsdichte in der Polymerhauptkette aufweisen. Wahrscheinlich konkurrieren die Kammpolymere bei der Adsorption mit den Anionen von Magnesiumsalzen, insbesondere mit doppelt negativ geladenen Sulfationen, und können diese bei hoher Ladungsdichte in der Polymerhauptkette eher verdrängen.

In bevorzugten Ausführungsformen weist das lineare Polymergerüst daher mindestens 20%, mindestens 50% oder mindestens 70% Carboxygruppen auf, bezogen auf die Gesamtzahl der monomeren Untereinheiten des linearen Polymergerüsts. Unter dem Begriff "Carboxygruppen" werden im vorliegenden Dokument Carbonsäuregruppen, deren Salze (Carboxylatgruppen) und deren Ester verstanden. In bevorzugten Ausführungsformen liegt der Anteil an Carboxygruppen zwischen 20 und 95%, insbesondere zwischen 50 und 95% oder zwischen 60 und 90%. Bevorzugt liegt das Säure-/Esterverhältnis (S/E) des linearen Polymergerüsts, also das Verhältnis der nicht veresterten Carboxygruppen zu den veresterten Carboxygruppen, zwischen 1 und 15, bevorzugt zwischen 2 und 10 oder zwischen 3 und 8. Wenn das lineare Polymergerüst eine Polymethacrylsäure ist, ist ein S/E-Verhältnis zwischen 1 und 6, insbesondere zwischen 2 und 5 besonders bevorzugt. Sofern das lineare Polymergerüst eine Polyacrylsäure ist, ist ein S/E-Verhältnis zwischen 3 und 10, insbesondere zwischen 4 und 8 besonders bevorzugt.

Erfindungsgemäß geeignete Kammpolymere sind einerseits solche, die über Ethergruppen an das lineare Polymergerüst gebundene Seitenketten aufweisen. Über Ethergruppen an das lineare Polymergerüst gebundene Seitenketten können durch Polymerisation von Vinylethern oder Allylethern eingeführt werden.

Derartige Kammpolymere sind beispielsweise in WO 2006/133933 A2 beschrieben, deren Inhalt hiermit insbesondere durch Bezugnahme eingeschlossen wird. Die Vinylether oder Allylether weisen insbesondere die Formel (II) auf.

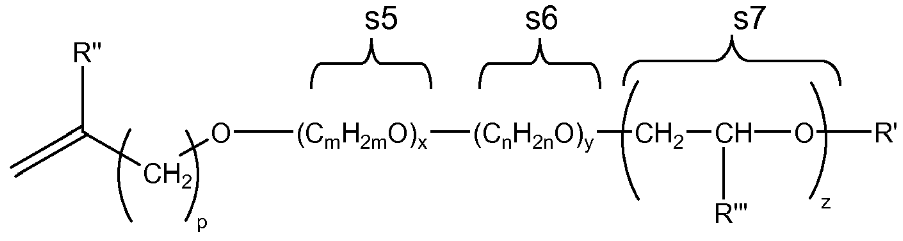

(II)

Hierbei steht R' für H oder für einen aliphatischen Kohlenwasserstoffrest mit 1 bis 20 C-Atomen oder einen cycloaliphatischen Kohlenwasserstoffrest mit 5 bis 8 C-Atomen oder einen, gegebenenfalls substituierten, Arylrest mit 6 bis 14 C-Atomen. R" steht für H oder für eine Methylgruppe, R'" steht für einen unsubstituierten oder substituierten Arylrest, insbesondere für einen Phenylrest.

Weiterhin stehen p für 0 oder 1; m und n unabhängig voneinander je für 2, 3 oder 4; und x und y und z unabhängig voneinander je für Werte aus dem Bereich von 0 bis 350.

Die Abfolge der in Formel (II) als s5, s6 und s7 bezeichneten Teilstrukturelemente kann hierbei alternierend, blockartig oder zufällig sein.

Insbesondere sind derartige Kammpolymere Copolymerisate von Vinylether oder Allylether mit Maleinsäureanhydrid, Maleinsäure, und/oder (Meth)acrylsäure.

Als Kammpolymer KP sind andererseits Kammpolymere geeignet, die über Estergruppen an das lineare Polymergerüst gebundene Seitenketten aufweisen. Gegebenenfalls sind zusätzlich über Amidgruppen gebundene Seitenketten enthalten. Diese Art von Kammpolymeren KP ist gegenüber den Kammpolymeren mit über Ethergruppen an das lineare Polymergerüst gebundenen Seitenketten bevorzugt. Besonders bevorzugte Kammpolymere KP sind Copolymere der Formel (I):

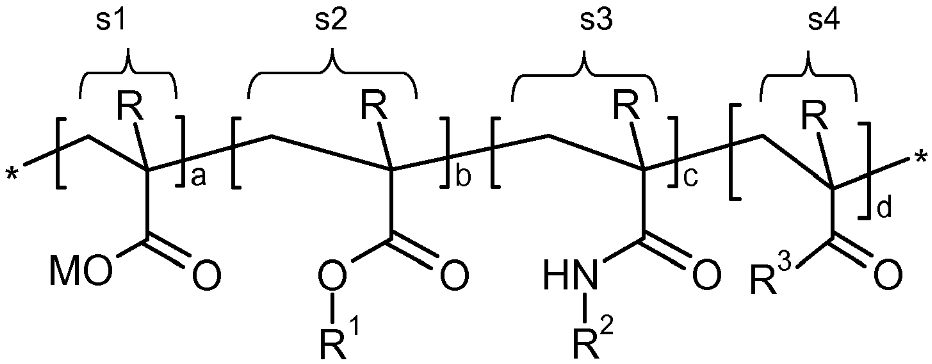

(I)

Hierbei steht M unabhängig voneinander für $H^+$, Alkalimetallion, Erdalkalimetallion, zwei- oder dreiwertiges Metallion, Ammoniumion, oder organische Ammoniumgruppe. Der Begriff "unabhängig voneinander" bedeutet im vorliegenden Dokument jeweils, dass ein Substituent unterschiedliche zur Verfügung stehenden Bedeutungen in demselben Molekül aufweisen kann. So kann beispielsweise das Copolymer der Formel (I) gleichzeitig Carbonsäuregruppen und Natriumcarboxylatgruppen aufweisen, das heisst, dass M in diesem Falle unabhängig voneinander für $H^+$ und $Na^+$ steht. Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stehen die Substituenten R unabhängig voneinander für Wasserstoff oder für eine Methylgruppe. Des Weiteren stehen die Substituenten $R^1$ unabhängig voneinander für $-[AO]_q-R^4$. Die Substituenten $R^2$ stehen unabhängig voneinander für eine $C_1$- bis $C_{20}$-Alkylgruppe, -Cycloalkylgruppe, -Alkylarylgruppe oder für $-[AO]_q-R^4$. Der Substituent A steht in beiden Fälle unabhängig voneinander für eine $C_2$- bis $C_4$-Alkylengruppe und $R^4$ für eine $C_1$- bis $C_{20}$-Alkylgruppe, -Cyclohexylgruppe oder -Alkylarylgruppe, während q einen Wert von 2 bis 250, insbesondere von 8 bis 200, besonders bevorzugt von 11 bis 150, darstellt.

Des Weiteren stehen die Substituenten $R^3$ unabhängig voneinander für - $NR^5R^6$, $-OR^7NR^8R^9$. Hierbei stehen $R^5$ und $R^6$ unabhängig voneinander für H oder eine $C_1$- bis $C_{20}$-Alkylgruppe, -Cycloalkylgruppe oder-Alkylarylgruppe oder -Arylgruppe oder für eine Hydroxyalkylgruppe oder für eine Acetoxyethyl- ($CH_3$-CO-O-$CH_2$-$CH_2$-) oder eine Hydroxy-isopropyl- (HOCH($CH_3$)-$CH_2$-) oder eine Acetoxyisopropylgruppe ($CH_3$-CO-O-CH($CH_3$)-$CH_2$-); oder $R^5$ und $R^6$

bilden zusammen einen Ring, von dem der Stickstoff ein Teil ist, um einen Morpholin- oder Imidazolinring aufzubauen. $R^7$ steht unabhängig von einander für einen unsubstituierten oder substituierten Alkylrest mit 1 bis 10 C-Atomen. Weiterhin stehen die Substituenten $R^8$ und $R^9$ je unabhängig voneinander für eine $C_1$- bis $C_{20}$-Alkylgruppe, -Cycloalkylgruppe, -Alkylarygruppe, -Arylgruppe oder für eine Hydroxyalkylgruppe.

Die Abfolge der in Formel (I) als s1, s2, s3 und s4 bezeichneten Teilstrukturelemente kann hierbei alternierend, blockartig oder zufällig angeordnet sein.

Schliesslich stellen die Indizes a, b, c und d Molverhältnisse der Struktureinheiten s1, s2, s3 und s4 dar. Diese Strukturelemente stehen in einem Verhältnis von

$$a/b/c/d = (0.1 - 0.9) / (0.1 - 0.9) / (0 - 0.8) / (0 - 0.3),$$

$$\text{insbesondere} \quad a/b/c/d = (0.1 - 0.9) / (0.1 - 0.9) / (0 - 0.5) / (0 - 0.1),$$

$$\text{bevorzugt} \quad a/b/c/d = (0.1 - 0.9) / (0.1 - 0.9) / (0 - 0.3) / (0 - 0.06),$$

zueinander, mit der Massgabe, dass a + b + c + d = 1 ist. Die Summe c + d ist bevorzugt grösser als 0. In weiteren bevorzugten Ausführungsformen ist a = 0.1 bis 0.9 und b + c + d = 0.9 bis 0.1, insbesondere a = 0.2 bis 0.8 und b + c + d = 0.8 bis 0.2. Bevorzugt ist a > 0.2 oder >0.3.

Die Herstellung des Kammpolymeren KP der Formel (I) erfolgt insbesondere nach den Methoden der radikalischen Polymerisation oder polymer-analogen Umsetzung. Die Herstellung kann einerseits durch radikalische Polymerisation der entsprechenden Monomere der Formel ($III_a$), ($III_b$), ($III_c$) bzw. ($III_d$), welche dann zu den Strukturelementen Struktureinheiten s1, s2, s3 und s4 führen,

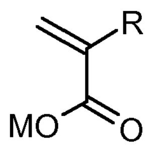
($III_a$)

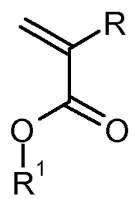
($III_b$)

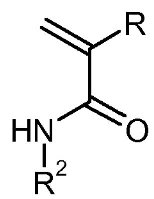
($III_c$)

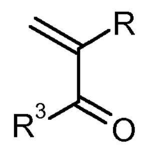
($III_d$)

oder andererseits durch eine sogenannte polymeranaloge Umsetzung einer Polycarbonsäure der Formel (IV) erfolgen

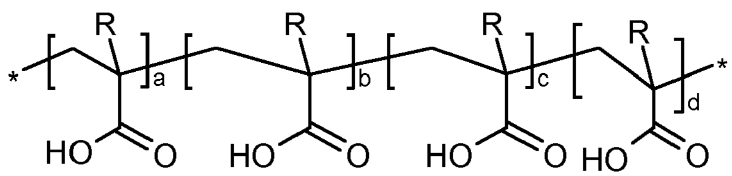
(IV).

In der polymer-analogen Umsetzung wird die Polycarbonsäure der Formel (IV) mit den korrespondierenden Alkoholen, Aminen verestert oder amidiert und dann allenfalls neutralisiert oder teilneutralisiert (je nach Art des Rest M z.B. mit Metallhydroxiden oder Ammoniak). Details zur polymer-analogen Umsetzung sind beispielsweise offenbart in EP 1 138 697 B1 auf Seite 7 Zeile 20 bis Seite 8 Zeile 50, sowie in dessen Beispielen, oder in EP 1 061 089 B1 auf Seite 4, Zeile 54 bis Seite 5 Zeile 38 sowie in dessen Beispielen. In einer Abart davon, wie sie in EP 1 348 729 A1 auf Seite 3 bis Seite 5 sowie in dessen Beispielen beschrieben sind, kann das Kammpolymer KP der Formel (I) im festem Aggregatszustand hergestellt werden. Die Offenbarung dieser gerade genannten Patentschriften wird hiermit insbesondere durch Bezugnahme eingeschlossen.

Es hat sich erwiesen, dass besonders bevorzugte Ausführungsformen der Kammpolymere **KP** der Formel (I) diejenigen sind, bei welchen c+d > 0, insbesondere d > 0, sind. Als Rest $R^3$ hat sich insbesondere $-NH-CH_2-CH_2-OH$ als besonderes vorteilhaft erwiesen.

Als besonders vorteilhaft erwiesen haben sich Kammpolymere **KP,** wie sie von Sika Schweiz AG unter der

Handelsnamenreihe ViscoCrete® kommerziell vertrieben werden, erwiesen.

Der erfindungsgemäße Magnesiumzement kann mit relativ wenig Wasser abgebunden werden. Der Zement zeigt insbesondere eine verbesserte Verarbeitbarkeit gegenüber Zusammensetzungen, die kein Kammpolymer enthalten. Erfindungsgemäß ist es bevorzugt, dass eine erfindungsgemä-βe Zementzusammensetzung, die Wasser, aber noch keinen Füllstoff enthält und verarbeitbar ist, nicht mehr als 40% Gew.-% Wasser aufweist.

Der Magnesiumzement kann neben dem tonhaltigen Gips ein weiteres Bindemittel enthalten. Unter den Begriff "Bindemittel" fallen neben Magnesiumzement weitere hydraulisch abbindende Substanzen, wie beispielsweise magnesiumfreie Zemente, insbesondere Portlandzemente oder Tonerdeschmelzzemente und deren Mischungen mit Flugaschen, Silica fume, Schlacke, Hüttensande und Kalk, insbesondere Kalksteinfüllmittel und gebrannter Kalk.

Der erfindungsgemäße Magnesiumzement enthält optional einen Füllstoff (c). Der Magnesiumzement kann erfindungsgemäß sowohl mit als auch ohne einen Füllstoff verarbeitet werden. Es ist jedoch bevorzugt, dass zur Verstärkung des Zements mindestens ein Füllstoff eingearbeitet wird. Der Zement, enthaltend (a) mindestens eine Magnesiumverbindung und (b) mindestens ein Kammpolymer, kann in einer Ausführungsform der Erfindung zunächst mit Wasser vermischt werden, wonach der Füllstoff eingearbeitet wird. In einer anderen Ausführungsform werden zunächst alle trockenen Komponenten inklusive des Füllstoffs (c) vermischt und es wird erst anschließend Wasser hinzugefügt. In bevorzugten Ausführungsformen liegt der Füllstoff in Form organischer und/oder anorganischer Fasern vor. In bevorzugten Ausführungsformen besteht der Füllstoff aus Zellulosefasern, insbesondere Holzwolle, Holzfasern, Holzspänen, oder aus anorganischen Fasern, insbesondere Mineralfasern wie Glaswolle oder Steinwolle.

Der erfindungsgemäße Zement und die Verarbeitungshilfe können im festen Aggregatszustand als Trockenmischung vorliegen. Eine solche Zusammensetzung ist über längere Zeit lagerfähig und wird typischerweise in Säcken abgepackt oder in Silos gelagert. Sie ist auch nach längerer Lagerungszeit einsetzbar und weist eine gute Rieselfähigkeit auf.

In bevorzugten Ausführungsformen enthält der erfindungsgemäße Magnesiumzement zusätzlich Konservierungsmittel, Entschäumer, Viskositätsregler, Flammschutzmittel, Hydrophobierungsmittel, Farbstoffe, Polycarboxylatether (PCE), Beschleuniger, Verzögerer, Schwindreduzierer, Schaumbildner, Stabilisatoren gegen Hitze und Licht und/oder Mittel zur pH-Wert Einstellung. Besonders bevorzugt ist der Einsatz von Konservierungsmitteln, Entschäumern und Viskositätsreglern. Grundsätzlich können dem Magnesiumzement übliche Zusatzstoffe beigemischt werden, die nach dem Stand der Technik bekannt sind.

Gegenstand der Erfindung ist auch eine Bindemittelsuspension, enthaltend

(a1) 25 bis 75 Gew.-%, bevorzugt 40 bis 65 Gew.-% Magnesiumoxid,
(a2) 1,5 bis 20 Gew.-%, bevorzugt 2 bis 10 Gew.-% weitere Magnesiumsalze,
(b) 0,1 bis 5 Gew.-%, bevorzugt 0,2 bis 2 Gew.-% Kammpolymere, und
(d) 20 bis 70 Gew.-%, bevorzugt 25 bis 55 Gew.-% Wasser.

Die Bindemittelsuspension enthält bevorzugt noch keine Füllstoffe. Die Bindemittelsuspension ist ein Zwischenprodukt bei der Herstellung von Formkörpern aus dem erfindungsgemäßen Magnesiumzement. Sie enthält Wasser und befindet sich damit im Prozess des Abbindens. In eine solche wässrige Bindemittelsuspension können die Füllstoffe eingearbeitet werden.

Ein Gegenstand der Erfindung ist auch ein Magnesiumzement in Form einer Suspension, enthaltend 85 bis 40 Gew.-% der erfindungsgemäßen Bindemittelsuspension und 15 bis 60 Gew.-% Füllstoffe (c). Gegenstand der Erfindung ist auch ein Magnesiumzement aus 85 bis 40 Gew.-%, bevorzugt 60 bis 75 Gew.-%, besonders bevorzugt 62 bis 71 Gew.-% der erfindungsgemäßen Bindemittelsuspension und 15 bis 60 Gew.-%, bevorzugt 25 bis 40 Gew.-%, besonders bevorzugt 29 bis 38 Gew.-% Füllstoffe (c).

Ein weiterer Gegenstand der Erfindung ist ein Verfahren zur Herstellung eines Formkörpers, umfassend die Schritte

(A) Vermischen der Komponenten (a) bis (c) gemäß mindestens einem der vorhergehenden Ansprüche mit Wasser,
(B) Formen zu einem Formköper und
(C) Aushärten des Formkörpers.

In Schritt (A) können die Komponenten (a) bis (c) mit Wasser grundsätzlich in beliebiger Reihenfolge vermischt werden. In bevorzugten Ausführungsformen werden jedoch zunächst die trockenen Komponenten (a) bis (c) vermischt, wonach im Anschluss Wasser zugegeben wird, oder es wird zunächst ein Suspension der Komponenten (a) und (b) mit Wasser hergestellt, wonach der Füllstoff (c) in die wässrige Suspension eingearbeitet wird. In einer bevorzugten Ausführungsform des Verfahrens umfasst Schritt (A):

(A) Vermischen von Magnesiumoxid, einer wässrigen Lösung mindestens eines weiteren Magnesiumsalzes und

mindestens eines Kammpolymers, das ein lineares Polymergerüst und daran gebundene Seitenketten aufweist, wobei das lineare Polymergerüst Carbonsäuregruppen und/oder Carboxylatgruppen aufweist, zu einer Suspension und Einarbeiten von Füllstoffen in die Suspension.

Bei dem Verfahren gemäß Schritt (A) wird bevorzugt eine wässrige Lösung des Magnesiumsalzes, insbesondere von Magnesiumsulfat oder Magnesiumchlorid, einem festen Magnesiumoxid zugesetzt. Dabei ist es bevorzugt, die Lösung des Magnesiumsalzes vorab mit dem Kammpolymer zu vermischen.

Ein weiterer Gegenstand der Erfindung ist ein Formkörper, erhältlich durch Aushärten eines erfindungsgemäßen Magnesiumzements oder durch ein erfindungsgemäßes Verfahren. Erfindungsgemäß wird mit "Formkörper" ein ausgehärteter, beweglicher Gegenstand bezeichnet, der eine dreidimensionale Ausdehnung aufweist. Das Aushärten des Formkörpers erfolgt durch Trocknen und/oder Erwärmen. In einer bevorzugten Ausführungsform der Erfindung ist der Formkörper eine Platte, insbesondere eine Holzwolleleichtbauplatte.

Holzwolleleichtbauplatten werden bevorzugt aus Magnesiumzementen hergestellt, die als Magnesiumverbindungen Magnesiumoxid und Magnesiumsulfat aufweisen. Die Herstellung von Holzwolleleichtbauplatten ist im Stand der Technik bekannt und wird beispielsweise in der DE 29 32 332 beschrieben. Aus einem Gemisch aus dem Magnesiumzement und der gegebenenfalls imprägnierten Holzwolle lassen sich wärme- und schalldämmende Leichtbauplatten herstellen. Diese werden üblicherweise bei erhöhter Temperatur, beispielsweise etwa 60°C, automatisch ausgeformt und anschließend nachgehärtet. Bei dem erfindungsgemäßen Verfahren wird bevorzugt eine Bandformanlage eingesetzt. Dabei wird zunächst eine Suspension der Bindemittel und der Kammpolymere, gegebenenfalls in Verbindung mit Zusatzstoffen, in Wasser hergestellt und einem Holzwollemischer zugeführt. Nach mechanischer Einarbeitung der Füllstoffe in die Suspension wird das Gemisch auf die Bandformanlage aufgetragen, wobei die Temperatur beispielsweise zwischen 60 und 100°C liegt. Die so erzeugten Platten werden getrocknet und konfektioniert. Die so hergestellten Platten sind auch unter dem Namen "Heraklith-Platten" bekannt. Das Imprägnieren der Holzwolle kann vorab durch Besprühen mit einer Magnesiumsulfatlösung und Bestäuben mit Magnesia erfolgen. Ein Verfahren zur Herstellung von Holzwollebauplatten wird beispielsweise in DE 1 007 685 offenbart. Auf die darin beschriebenen Verfahrensschritte und Vorrichtungen wird hiermit ausdrücklich Bezug genommen.

Gegenstand der Erfindung ist auch eine Verarbeitungshilfe für Magnesiumzemente, enthaltend

mindestens 0,5 Gew.-% eines Kammpolymers, das ein lineares Polymergerüst und daran gebundene Seitenketten aufweist, wobei das lineare Polymergerüst Carbonsäuregruppen und Carboxylatgruppen aufweist, und mindestens einen weiteren Bestandteil, ausgewählt aus einer Magnesiumverbindung, insbesondere einem Magnesiumsalz, und einem anorganischen Füllstoff,

wobei die Verarbeitungshilfe als wässrige Lösung oder in Pulverform vorliegt.

Die erfindungsgemäße Verarbeitungshilfe ist ohne Zusatz weiterer Substanzen, wie beispielsweise Wasser, noch nicht reaktiv. Die Verarbeitungshilfe kann vom Anwender in einfacher Weise einer Zementgrundzubereitung zugefügt werden. Die Vormischung von Komponenten in der Verarbeitungshilfe erleichtert die gleichmäßige Verteilung in dem Magnesiumzement.

In einer bevorzugten Ausführungsform ist die Verarbeitungshilfe eine Polymerlösung. Eine solche Polymerlösung kann neben dem Kammpolymer und Wasser weitere Zusätze enthalten, insbesondere Viskositätsregler, Entschäumer und Konservierungsmittel, sowie sonstige Zusätze wie Dispergierhilfsmittel, pyrogenes oder kolloidales Siliciumdioxid, Phosporsäuren, Biozide, Fungizide, Calciumsulfat oder amorphes Aluminiumoxid.

Gegenstand der Erfindung ist auch die Verwendung eines Kammpolymers, das ein lineares Polymergerüst und daran gebundene Seitenketten aufweist, wobei das lineare Polymergerüst Carbonsäuregruppen und Carboxylatgruppen aufweist, zur Verbesserung der Verarbeitbarkeit, insbesondere zur Verflüssigung, oder zur Verbesserung der Stabilität von Magnesiumzementen.

Überraschenderweise löst der erfindungsgemäße Magnesiumzement die erfindungsgemäße Aufgabe. Durch den Zusatz der Kammpolymere zu Magnesiumzementen kann überraschenderweise der Wasseranteil signifikant gesenkt werden. Gleichzeitig werden die Produkteigenschaften, wie die Dichte und die Festigkeit der ausgehärteten Festkörper, verbessert oder zumindest nicht in negativer Weise beeinträchtigt. Ohne an eine Theorie gebunden zu sein, könnte die Verbesserung der Produkteigenschaften daher resultieren, dass der ausgehärtete Festkörper wegen des vergleichsweise geringen Wasseranteils eine höhere Dichte und Festigkeit aufweist. Demgegenüber könnte ein Festkörper nach dem Stand der Technik, der mit einem höheren Wasseranteil hergestellt wird, Hohlräume aufweisen, die bei der abschließenden Entfernung des Wassers durch Trocknen oder Sintern entstehen. Grundsätzlich war es überraschend, dass Kammpolymere, deren Verflüssigungswirkung für Gipszusammensetzungen nach dem Stand der Technik bekannt war, auch eine Verflüssigungswirkung bei Magnesiumzementen bewirken. Angesichts der unterschiedlichen chemischen Beschaffenheit von Magnesiumzementen konnte eine ähnliche Wirkung nicht erwartet werden. Darüber hinaus war nicht zu erwarten, dass die ausgehärteten Magnesiumzemente verbesserte Produkteigenschaften aufweisen.

In einer bevorzugten Ausführungsform der Erfindung weist ein erfindungsgemäßer Formkörper eine Biegezugfestigkeit nach DIN EN 196-1 von mehr als 0,6, insbesondere von mehr als 0,7 $N/mm^2$ nach 30 min auf.

Bevorzugt weist ein erfindungsgemäßer Formkörper nach 30 min eine Druckfestigkeit nach DIN EN 196-1 von mehr als 4, bevorzugt mehr als 5, besonders bevorzugt mehr als 5,5 N/mm$^2$ nach 30 min auf.

Die Festrohdichte eines Formkörpers ohne Füllstoffe liegt bevorzugt oberhalb von 1,5, insbesondere oberhalb 1,55 oder oberhalb 1,6 kg/m$^3$.

Für das Trocknen der erfindungsgemäßen Formkörper ist eine vergleichsweise geringe Wärmemenge erforderlich. Dies führt zu Energie-und Kosteneinsparungen bei der Herstellung der Formkörper gegenüber bekannten Formkörpern, die einen höheren Wasseranteil aufweisen. Überraschenderweise kann erfindungsgemäß die Festigkeit der Platten verbessert werden, obwohl eine geringere Menge einer Magnesiumsalzlösung eingesetzt wird, wodurch sowohl der Anteil des Magnesiumsalzes als auch der Wasseranteil erniedrigt wird.

Ausführungsbeispiele

Herstellung einer Magnesit Suspension mit Fließhilfsmittel

Zur Herstellung der $MgSO_4$-Lösung werden zunächst 120, 150 oder 180 g Magnesiumsulfat Heptahydrat ($MgSO_4 \cdot 7 H_2O$) in 1 Liter Wasser gelöst. Zum vollständigen Lösen wird die Mischung für ca. 2 h auf 50 °C unter Rühren erwärmt. Zu 425 g dieser $MgSO_4$-Lösung werden 5,0 g Kammpolymer als 40%ige Polymerlösung unter Rühren zugegeben. In diese Lösung werden 500 g MgO unter Rühren mit einem geeigneten Rührwerkzeug (im Beispiel 4-flügeliger Propeller, RZR 2051, Firma Heidolph) innerhalb von 15 s bei einer Drehzahl von 500 s-1 eingestreut. Nach einer Pause von 15 s zum Säubern der Wand des Mischgefäßes wird für 120 s bei 2000 s-1 gerührt.

Mischanweisung:

| | |
|---|---|
| 0" | Magnesiumsulfatlösung + Kammpolymer vorlegen |
| 0" - 15"s | MgO unter Rühren bei ca. 500 U/min einstreuen |
| 15" -30" | Pause zum Säubern der Mischgefäßwandungen |
| 30" - 2'30" | Rühren bei 2000 U/min |

Es wurden erfindungsgemäße Zementmischungen 1 bis 3 mit einem Kammpolymer (Kammpolymer der Formel (I) mit einem S/E-Verhältnis zwischen 3 und 10) und unterschiedlichen Anteilen an Magnesiumsulfat untersucht. In einem Vergleichsversuch wurde kein Kammpolymer zugesetzt. Die Zemente der Beispiele wurden mit unterschiedlich konzentrierten Magnesiumsulfatlösungen hergestellt. Die eingesetzten Mengen sind in Tabelle 1 gezeigt.

| | |
|---|---|
| Vergleichsbeispiel V (ohne Kammpolymer) | 120 g/l $MgSO_4$ |
| Beispiel 1 (mit 1 Gew.-% Kammpolymer): | 120 g/l $MgSO_4$ |
| Beispiel 2 (mit 1 Gew.-% Kammpolymer): | 150 g/l $MgSO_4$ |
| Beispiel 3 (mit 1 Gew.-% Kammpolymer): | 180 g/l $MgSO_4$ |

Prüfung des Magnesitbinders mit Kammpolymer

Zur Prüfung der Festigkeiten wird die Suspension in auf ca. 100 °C vorgewärmte Stahlformen nach DIN EN 196-1 mit je drei Kammern zu 160 • 40 • 40 mm$^3$ gefüllt. In diesen Stahlformen wird die Suspension abgedeckt bei 100 °C bis zum Prüftermin gelagert. Nach 15 min bzw. 30 min wird die Druckfestigkeit nach DIN EN 196-1 geprüft. Die Ergebnisse sind in Tabelle 1 gezeigt.

Tabelle 1: Zementzusammensetzungen und Messergebnisse

| Beispiel: | | V | 1 | 2 | 3 |
|---|---|---|---|---|---|
| $MgO$ | (g) | 500 | 500 | 500 | 500 |
| Massenverhältnis $MgO/MgSO_4$ -Lösung | | 1,00 | 0,85 | 0,85 | 0,85 |
| 1,0% Kammpolymer | | - | 5,0 | 5,0 | 5,0 |
| $MgSO_4$ -Lösung (120 g/l) in g | | 500 | 425 | | |
| $MgSO_4$ -Lösung (150 g/l) in g | | | | 425 | |
| $MgSO_4$ -Lösung (180 g/l) in g | | | | | 425 |
| Festigkeiten nach 15 min | | | | | |
| Probenlagerung | (°C) | 100°C | 100°C | 100°C | 100°C |
| Festrohdichte | (kg/dm³) | 1,54 | 1,57 | 1,63 | 1,66 |
| Biegezugfestigkeit | (N/mm²) | 0,65 | 0,67 | 0,62 | 0,8 |
| Druckfestigkeit | (N/mm²) | 3,3 | 3,9 | 4,7 | 6,7 |
| Festigkeiten nach 30 min | | | | | |
| Probenlagerung | (°C) | 100°C | 100°C | 100°C | 100°C |
| Festrohdichte | (kg/dm³) | 1,51 | 1,55 | 1,59 | 1,65 |
| Biegezugfestigkeit | (N/mm²) | 0,37 | 0,58 | 0,65 | 0,92 |
| Druckfestigkeit | (N/mm²) | 4,7 | 6,3 | 6,7 | 8,6 |

Die Ausführungsbeispiele zeigen, dass die durch das Kammpolymer ermöglichte Einsparung an $MgSO_4$-Lösung zu einer deutlichen Steigerung der Druckfestigkeit führt. Dies kann entweder zur Qualitätssteigerung oder zur Einsparung an $MgSO_4$ genutzt werden. Darüber hinaus ergibt sich eine Energieeinsparung durch den geringeren Feuchtigkeitsgehalt der HWL-Platten.

**Patentansprüche**

1. Magnesiumzement, enthaltend

   (a) mindestens eine Magnesiumverbindung,
   (b) mindestens ein Kammpolymer, das ein lineares Polymergerüst und daran gebundene Seitenketten aufweist, wobei das lineare Polymergerüst Carbonsäuregruppen und/oder Carboxylatgruppen aufweist, und
   (c) gegebenenfalls mindestens einen Füllstoff.

2. Magnesiumzement gemäß Anspruch 1, wobei als Magnesiumverbindungen Magnesiumoxid, Magnesiumcarbonat und/oder Magnesiumhydroxid und zusätzlich mindestens ein weiteres Magnesiumsalz enthalten sind.

3. Magnesiumzement gemäß Anspruch 2, wobei das weitere Magnesiumsalz ausgewählt ist aus Magnesiumsulfat, -chlorid, -nitrat, -jodid und -bromid.

4. Magnesiumzement gemäß mindestens einem der vorhergehenden Ansprüche, wobei das lineare Polymergerüst

mindestens 5% Carbonsäuregruppen und/oder Carboxylatgruppen aufweist, bezogen auf die Gesamtzahl der monomeren Untereinheiten des linearen Polymergerüsts.

**5.** Magnesiumzement gemäß mindestens einem der vorhergehenden Ansprüche, wobei das Kammpolymer ein Copolymer von Vinylether oder Allylether mit Maleinsäureanhydrid, Maleinsäure, (Meth)acrylsäure oder (Meth)acrylamid ist.

**6.** Magnesiumzement gemäß mindestens einem der vorhergehenden Ansprüche, wobei das Kammpolymer ein Copolymer der Formel (I) ist

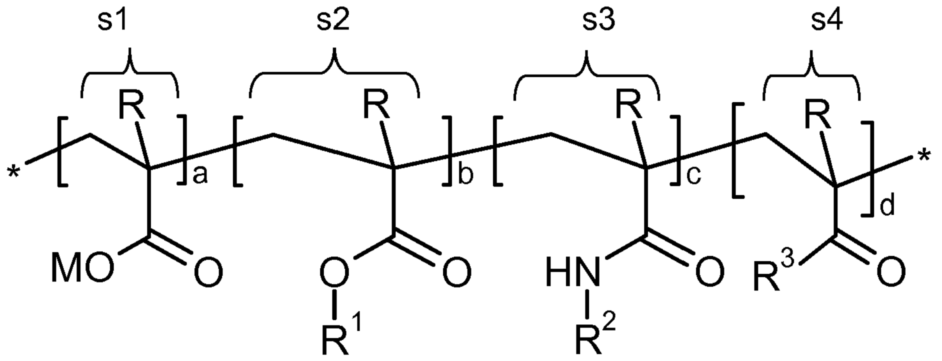

(I)

wobei

M unabhängig voneinander ausgewählt ist aus $H^+$, Alkalimetallion, Erdalkalimetallion, zwei- oder dreiwertiges Metallion, Ammoniumion oder organische Ammoniumgruppe;
R unabhängig voneinander für Wasserstoff oder für eine Methylgruppe steht;
$R^1$ unabhängig voneinander für $-[AO]_q-R^4$ steht;
$R^2$ unabhängig voneinander für eine $C_1$- bis $C_{20}$-Alkylgruppe, -Cycloalkylgruppe, -Alkylarylgruppe oder für $-[AO]_q-R^4$ steht, wobei A unabhängig voneinander für eine $C_2$- bis $C_4$-Alkylengruppe;
$R^4$ für eine $C_1$- bis $C_{20}$-Alkylgruppe, -Cyclohexylgruppe oder -Alkylarylgruppe steht, und
q einen Wert von 2 bis 250, insbesondere von 8 bis 200, besonders bevorzugt von 11 bis 150, darstellt;
$R^3$ unabhängig voneinander für $-NR^5R^6$ oder $-OR^7NR^8R^9$ steht, wobei $R^5$ und $R^6$ unabhängig voneinander für H oder eine $C_1$- bis $C_{20}$-Alkylgruppe, -Cycloalkylgruppe oder -Alkylarylgruppe oder -Arylgruppe oder für eine Hydroxyalkylgruppe oder für eine Acetoxyethyl- ($CH_3$-CO-O-$CH_2$-$CH_2$-), eine Hydroxyisopropyl- (HO-CH($CH_3$)-$CH_2$-) oder eine Acetoxyisopropylgruppe $CH_3$-CO-O-CH($CH_3$)-$CH_2$-) steht,
oder wobei $R^5$ und $R^6$ zusammen einen Ring bilden, von dem der Stickstoff ein Teil ist, um einen Morpholin- oder Imidazolinring aufzubauen,
$R^7$ für einen unsubstituierten oder substituierten Alkylrest mit 1 bis 10 C-Atomen steht,
$R^8$ und $R^9$ je unabhängig für eine $C_1$ bis $C_{20}$-Alkylgruppe, -Cycloalkylgruppe, -Alkylarygruppe, -Arylgruppe oder für eine Hydroxyalkylgruppe stehen,
wobei die Abfolge der Teilstrukturelemente s1, s2, s3 und s4 alternierend, blockartig oder zufällig angeordnet ist, wobei a, b, c und d Molverhältnisse der Struktureinheiten s1, s2, s3 und s4 darstellen, mit dem Verhältnis a/b/c/d =

(0.1 – 0.9) / (0.1 – 0.9) / (0 – 0.8) / (0 – 0.3),
insbesondere (0.1 – 0.9) / (0.1 – 0.9) / (0 – 0.5) / (0 – 0.1),
bevorzugt (0.1 – 0.9) / (0.1 – 0.9) / (0 – 0.3) / (0 – 0.06),

mit der Massgabe, dass a + b + c + d = 1 ist und die Summe c + d bevorzugt grösser als 0 ist.

**7.** Magnesiumzement gemäß mindestens einem der vorhergehenden Ansprüche, wobei der Füllstoff (c) in Form organischer und/oder anorganischer Fasern vorliegt, insbesondere in Form von Zellulosefasern, insbesondere Holzwolle, Holzfasern, Holzspänen, oder Glaswolle oder Steinwolle.

**8.** Magnesiumzement gemäß mindestens einem der vorhergehenden Ansprüche, enthaltend zusätzlich Konservierungsmittel, Entschäumer, Viskositätsregler, Flammschutzmittel, Hydrophobierungsmittel und Farbstoffe.

**9.** Bindemittelsuspension, enthaltend

(a1) 25 bis 75 Gew.-% Magnesiumoxid
(a2) 1,5 bis 20 Gew.-% weitere Magnesiumsalze
(b) 0,1 bis 5 Gew.-% Kammpolymere, und
(d) 20 bis 70 Gew.-% Wasser.

**10.** Magnesiumzement gemäß mindestens einem der vorhergehenden Ansprüche, enthaltend 85 bis 40 Gew.-% einer Bindemittelsuspension gemäß Anspruch 9 und

(c) 15 bis 60 Gew.-% Füllstoffe.

**11.** Verfahren zur Herstellung eines Formkörpers, umfassend die Schritte

(A) Vermischen der Komponenten (a) bis (c) gemäß mindestens einem der vorhergehenden Ansprüche mit Wasser,
(B) Formen zu einem Formköper und
(C) Aushärten des Formkörpers.

**12.** Formkörper, erhältlich durch Aushärten eines Magnesiumzements gemäß mindestens einem der Ansprüche 1 bis 10 oder durch ein Verfahren gemäß Anspruch 11.

**13.** Formkörper nach Anspruch 12 in Form einer Platte, insbesondere einer Holzwolleleichtbauplatte.

**14.** Verarbeitungshilfe für aushärtbare Magnesiumzementen, enthaltend
mindestens 0,5 Gew.-% mindestens eines Kammpolymers, das ein lineares Polymergerüst und daran gebundene Seitenketten aufweist, wobei das lineare Polymergerüst Carbonsäuregruppen und/oder Carboxylatgruppen aufweist,
mindestens einen weiteren Bestandteil, ausgewählt aus einer Magnesiumverbindung und einem anorganischen Füllstoff,
wobei die Verarbeitungshilfe in Pulverform oder als wässrige Suspension vorliegt.

**15.** Verwendung eines Kammpolymers, das ein lineares Polymergerüst und daran gebundene Seitenketten aufweist, wobei das lineare Polymergerüst Carbonsäuregruppen und/oder Carboxylatgruppen aufweist, zur Verbesserung der Verarbeitbarkeit oder der Stabilität von Magnesiumzementen.

Europäisches Patentamt
European Patent Office
Office européen des brevets

# EUROPÄISCHER RECHERCHENBERICHT

Nummer der Anmeldung
EP 10 19 6974

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2006 014529 A1 (BASF CONSTRUCTION POLYMERS GMB [DE]) 4. Oktober 2007 (2007-10-04) * Formel (I)-(VI);Ausführungsbeispiele; Absätze [0001], [0012] - [0023] * | 14 | INV. C04B28/10 C04B28/30 C04B28/32 |
| X | EP 0 610 699 A1 (CHEMIE LINZ GMBH [AT]; HOLDERCHEM HOLDING AG [CH]) 17. August 1994 (1994-08-17) * Seite 3, Zeile 1 - Seite 8, Zeile 9 * * Seite 8, Zeilen 19-41 * * Ausführungsbeispiele * | 1-10,14, 15 | |
| X,D | WO 2006/133933 A2 (DEGUSSA CONSTRUCTION POLYMERS [DE]; BICHLER MANFRED [DE]; HOMMER HERBE) 21. Dezember 2006 (2006-12-21) * Ausführungsbeispiele; Seite 3, Zeile 26 - Seite 10, Zeile 29 * | 14 | |
| X | DE 10 2005 053019 A1 (BASF AG [DE]) 10. Mai 2007 (2007-05-10) * Ausführungsbeispiele; Absätze [0001], [0002], [0003], [0016] - [0136] * | 1-5, 7-10,14, 15 | RECHERCHIERTE SACHGEBIETE (IPC) C04B |
| Y,D | DE 10 07 685 B (TECTUM CORP) 2. Mai 1957 (1957-05-02) * Spalte 2, Zeile 51 - Spalte 5, Zeile 43 * | 11-13 | |
| Y | WO 02/083594 A1 (ARCO CHEM TECH [US]) 24. Oktober 2002 (2002-10-24) * Seite 4, Zeilen 25-27 * * Ausführungsbeispiele; Seite 15, Zeile 24 - Seite 17, Zeile 11 * | 11-13 | |

-/--

Der vorliegende Recherchenbericht wurde für alle Patentansprüche erstellt

1

| Recherchenort | Abschlußdatum der Recherche | Prüfer |
|---|---|---|
| Den Haag | 17. Mai 2011 | Büscher, Olaf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 10 19 6974

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 1 138 697 A1 (SIKA AG [CH] SIKA SCHWEIZ AG [CH]) 4. Oktober 2001 (2001-10-04)<br>* das ganze Dokument *<br>----- | 1,6,14, 15 | |
| A,D | EP 1 061 089 A1 (SIKA AG [CH] SIKA SCHWEIZ AG [CH]) 20. Dezember 2000 (2000-12-20)<br>* das ganze Dokument *<br>----- | 1,6,14, 15 | |
| A,D | EP 1 348 729 A1 (SIKA SCHWEIZ AG [CH]) 1. Oktober 2003 (2003-10-01)<br>* das ganze Dokument *<br>----- | 1,6,14, 15 | |
| | | | RECHERCHIERTE SACHGEBIETE (IPC) |

1

Der vorliegende Recherchenbericht wurde für alle Patentansprüche erstellt

| Recherchenort | Abschlußdatum der Recherche | Prüfer |
|---|---|---|
| Den Haag | 17. Mai 2011 | Büscher, Olaf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 10 19 6974

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2011

| Im Recherchenbericht angeführtes Patentdokument | Datum der Veröffentlichung | Mitglied(er) der Patentfamilie | Datum der Veröffentlichung |
|---|---|---|---|
| DE 102006014529 A1 | 04-10-2007 | EP 2024295 A1 | 18-02-2009 |
| | | WO 2007112890 A1 | 11-10-2007 |
| | | US 2009111913 A1 | 30-04-2009 |
| EP 0610699 A1 | 17-08-1994 | AT 399340 B | 25-04-1995 |
| | | AT 146489 T | 15-01-1997 |
| | | AU 672461 B2 | 03-10-1996 |
| | | BR 9400401 A | 23-08-1994 |
| | | CA 2114688 A1 | 02-08-1994 |
| | | CZ 9400204 A3 | 17-08-1994 |
| | | DE 4304109 A1 | 18-08-1994 |
| | | DE 59401289 D1 | 30-01-1997 |
| | | DK 0610699 T3 | 06-01-1997 |
| | | ES 2098066 T3 | 16-04-1997 |
| | | FI 940468 A | 02-08-1994 |
| | | HU 67873 A2 | 29-05-1995 |
| | | JP 6322041 A | 22-11-1994 |
| | | MA 23100 A1 | 01-10-1994 |
| | | NO 940327 A | 02-08-1994 |
| | | SI 9400051 A | 30-09-1994 |
| | | SK 10294 A3 | 09-11-1994 |
| | | US 5369198 A | 29-11-1994 |
| | | ZA 9400643 A | 19-09-1994 |
| WO 2006133933 A2 | 21-12-2006 | AT 414728 T | 15-12-2008 |
| | | AU 2006257345 A1 | 21-12-2006 |
| | | DE 102006027035 A1 | 11-01-2007 |
| | | DK 1902085 T3 | 23-03-2009 |
| | | EP 1902085 A2 | 26-03-2008 |
| | | ES 2314918 T3 | 16-03-2009 |
| | | JP 2008544000 T | 04-12-2008 |
| | | PT 1902085 E | 12-12-2008 |
| | | SI 1902085 T1 | 30-04-2009 |
| DE 102005053019 A1 | 10-05-2007 | EP 1948573 A2 | 30-07-2008 |
| | | WO 2007051858 A2 | 10-05-2007 |
| | | JP 2009514931 T | 09-04-2009 |
| | | KR 20080075158 A | 14-08-2008 |
| | | US 2008300343 A1 | 04-12-2008 |
| DE 1007685 B | 02-05-1957 | KEINE | |
| WO 02083594 A1 | 24-10-2002 | AT 387413 T | 15-03-2008 |
| | | AU 2002250269 A1 | 28-10-2002 |
| | | BR 0208843 A | 09-03-2004 |
| | | CA 2443072 A1 | 24-10-2002 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 10 19 6974

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2011

| Im Recherchenbericht angeführtes Patentdokument | Datum der Veröffentlichung | Mitglied(er) der Patentfamilie | Datum der Veröffentlichung |
|---|---|---|---|
| WO 02083594 A1 | | DE 60225259 T2 | 12-03-2009 |
| | | EP 1377533 A1 | 07-01-2004 |
| | | ES 2299562 T3 | 01-06-2008 |
| | | JP 2004525061 T | 19-08-2004 |
| | | MX 233466 B | 06-01-2006 |
| | | US 2003019401 A1 | 30-01-2003 |
| EP 1138697 A1 | 04-10-2001 | GR 2001300071 T1 | 31-12-2001 |
| EP 1061089 A1 | 20-12-2000 | AT 260940 T | 15-03-2004 |
| | | DE 69915260 D1 | 08-04-2004 |
| | | DE 69915260 T2 | 03-03-2005 |
| | | DE 1061089 T1 | 19-07-2001 |
| | | DK 1061089 T3 | 12-07-2004 |
| | | ES 2154254 T1 | 01-04-2001 |
| | | GR 2001300004 T1 | 28-02-2001 |
| | | JP 4608699 B2 | 12-01-2011 |
| | | JP 2001011129 A | 16-01-2001 |
| | | PT 1061089 E | 30-07-2004 |
| | | US 6387176 B1 | 14-05-2002 |
| EP 1348729 A1 | 01-10-2003 | AT 341577 T | 15-10-2006 |
| | | AU 2003227536 A1 | 08-10-2003 |
| | | BR 0308679 A | 01-02-2005 |
| | | CA 2480061 A1 | 02-10-2003 |
| | | CN 1643036 A | 20-07-2005 |
| | | CN 1916053 A | 21-02-2007 |
| | | DK 1490424 T3 | 05-02-2007 |
| | | WO 03080714 A1 | 02-10-2003 |
| | | EP 1490424 A1 | 29-12-2004 |
| | | EP 1632519 A2 | 08-03-2006 |
| | | ES 2274228 T3 | 16-05-2007 |
| | | JP 2005520900 T | 14-07-2005 |
| | | JP 2010255003 A | 11-11-2010 |
| | | NZ 536106 A | 31-03-2006 |
| | | PT 1490424 E | 31-01-2007 |
| | | SI 1490424 T1 | 28-02-2007 |
| | | US 2006004148 A1 | 05-01-2006 |
| | | US 2008119602 A1 | 22-05-2008 |
| | | ZA 200408401 A | 07-07-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2932332 A1
- DE 2532581 A1
- DE 2903177 A1
- DE 1007685
- WO 2006133933 A2
- EP 1138697 B1
- EP 1061089 B1
- EP 1348729 A1
- DE 2932332